# EUROPÄISCHE PATENTSCHRIFT

(11) **EP 1 030 462 B1**
(45) Veröffentlichungstag und Bekanntmachung des Hinweises auf die Patenterteilung: **10.11.2004**
(21) Anmeldenummer: 00102840.6
(22) Anmeldetag: 11.02.2000
(51) Int. Cl.: H04B 1/74, H04L 12/46, H04L 12/437, H04L 29/14, H04J 3/08

(54) **Dupliziertes Übertragungsnetzwerk und Betriebsverfahren dafür**
Duplicate communications network and operating method thereof
Réseau de communication dupliqué et son procédé d'utilisation

(30) Priorität: 15.02.1999 DE 19906195
(43) Veröffentlichungstag der Anmeldung: 23.08.2000
(73) Patentinhaber: Tenovis GmbH & Co. KG, 60362 Frankfurt am Main (DE)
(72) Erfinder: Maier, Klaus, 61231 Bad Nauheim (DE); Weisenburger, Alfons, 63225 Langen (DE)

(56) Entgegenhaltungen:
- WO-A-97/01907
- GB-A- 2 299 914
- US-A- 4 884 263

## Beschreibung

Die Erfindung betrifft ein dupliziertes Übertragungsnetzwerk, das heißt ein Übertragungsnetzwerk, in dem Übertragungsstrecken für Daten und Knoten, die Daten von einer Übertragungsstrecke auf eine andere vermitteln, zweifach vorhanden sind.

Eine erste Gruppe dieser Übertragungsstrecken und Knoten, als aktiv bezeichnet, bilden ein sogenanntes aktives Netz, auf dem bei ordnungsgemäßer Funktion Daten zwischen allen an das Übertragungsnetzwerk angeschlossenen Sender- und/oder Empfängermodulen übertragen werden können. Jeder aktiven Übertragungsstrecke beziehungsweise jedem aktiven Knoten ist eine passive Übertragungsstrecke beziehungsweise ein passiver Knoten zugeordnet. Die Gesamtheit der passiven Übertragungsstrecken und Knoten wird als passives Netz bezeichnet, aktives und passives Netz bilden zusammen das Übertragungsnetzwerk.

Im Falle einer Störung eines aktiven Knotens oder einer aktiven Übertragungsstrecke wird der Übertragungsweg der Daten über den jeweils zugehörigen passiven Knoten beziehungsweise die zugehörige passive Übertragungsstrecke gelegt, so daß der Datenverkehr ohne Unterbrechung oder mit minimaler Unterbrechung aufrechterhalten werden kann.

Die Erfindung betrifft ferner und insbesondere ein Verfahren zum Betreiben eines solchen Übertragungsnetzwerks.

Es sind Übertragungsnetzwerke bekannt, bei denen an den Ein- und Ausgängen eines ersetzbaren Elements wie etwa einer Übertragungsstrecke oder eines Knotens Schalter angeordnet sind, die, wenn das ersetzbare Element als defekt erkannt wird, dessen Verbindungen zum Rest des aktiven Netzes unterbrechen können und stattdessen Verbindungen zu dem entsprechenden Ersatzelement des passiven Netzes herstellen, das so in das aktive eingegliedert wird. Die Zahl der hierfür benötigten Schalter ist hoch und ihre Steuerung ist aufwendig.

Die WO-A-97/01907 offenbart ein Verfahren zum Betreiben eines duplizierten Übertragungsnetzwerks, das ein aktives und ein passives Netz mit identischer Struktur umfaßt und in dem Datenpakete zwischen Sender-/Empfängermodulen übertragen werden, wobei durch eine in einem Datenpaket enthaltene Zieladreßangabe ein oder mehrere Empfängermodule adressiert sein können. Jedes Empfängermodul ist über jeweils eine Übertragungsstrecke an einen Knoten des aktiven Netzes und einen entsprechenden Knoten des passiven Netzes angeschlossen und jeder Knoten des aktiven Netzes ist an den entsprechenden Knoten des passiven Netzes über eine Verbindungsstrecke angeschlossen. Zur Übertragung von Daten zwischen Sender- und Empfängermodulen sendet ein Sendermodul zwei Datenpakete mit gleichem Inhalt an einen Knoten des aktiven Netzes und einen entsprechenden Knoten des passiven Netzes aus und ein Empfängermodul an es adressierte Datenpakete von einem Knoten empfängt. Das dortige duplizierte Übertragungsnetzwerk weist eine Ringstruktur auf, die einen hohen Schaltungs- und Verwaltungsaufwand erfordert, da jeder Knoten über vier Schnittstellen paarweise mit zwei weiteren Knoten verbunden ist.

Durch die vorliegende Erfindung wird ein Verfahren zum Betreiben eines duplizierten Übertragungsnetzwerks geschaffen, das die Überbrückung defekter Elemente mit geringem Schaltungs- und Verwaltungsaufwand ermöglicht. Zu diesem Zweck wird ein Verfahren vorgeschlagen zum Betreiben eines duplizierten Übertragungsnetzwerks, das ein aktives und ein passives Netz mit identischer Struktur umfaßt und in dem Datenpakete zwischen Sender-/Empfängermodulen übertragen werden, wobei durch eine in einem Datenpaket enthaltene Zieladresse ein oder mehrere Empfängermodule adressiert sein können, wobei jedes Sender-/Empfängermodul über eine Verbindungsstrecke an einen Knoten des aktiven Netzes und einen entsprechenden Knoten des passiven Netzes angeschlossen ist, und jeder Knoten des aktiven Netzes an den entsprechenden Knoten des passiven Netzes über eine Verbindungsstrecke angeschlossen ist.

Bei dem erfindungsgemäßen Verfahren werden zur Übertragung von Daten zwischen Sender- und Empfängermodulen zunächst zwei Datenpakete mit gleichem Inhalt von einem Sendermodul an einen Knoten des aktiven Netzes und einen entsprechenden Knoten des passiven Netzes ausgesendet. Diese Datenpakete werden bei Eintritt in den passiven Knoten gekennzeichnet, sofern die Übertragungsstrecke vom Sendermodul zum aktiven Knoten intakt ist. Dann werden für jedes Paket im aktiven und im passiven Knoten die Übertragungsstrecken ermittelt, über die es weitergeleitet werden kann. Das Paket wird in jedem Fall über diejenigen ermittelten Übertragungsstrekken weitergeleitet, die keine Übertragungsstrecken zwischen einem aktiven und dem entsprechenden passiven Knoten sind. Über eine solche Übertragungsstrecke zwischen aktivem und passivem Knoten wird das Paket nur weitergeleitet, wenn es nicht gekennzeichnet ist. Schließlich empfängt ein Empfängermodul an es adressierte Datenpakete von einem angeschlossenen Knoten.

Im Falle eines einfachen Übertragungsnetzwerks mit nur einem aktiven Knoten erlaubt dieses Verfahren die Überbrückung einer beliebigen defekten Übertragungsstrecke zwischen einem Modul und dem Knoten mit Hilfe der einzigen Übertragungsstrecke von dem aktiven zum passiven Knoten. Eine Vielzahl von Schaltern zur Eingliederung eines Ersatzelementes ins aktive Netz und deren Steuerung entfällt.

Wenn das Netz ordnungsgemäß funktioniert, erhält jedes Empfängermodul jedes übertragene Datenpaket einmal über eine an einen aktiven Knoten angeschlossene Übertragungsstrecke und einmal über eine an einen passiven Knoten angeschlossene. Zweckmäßigerweise nimmt das Empfängermodul Datenpakete jeweils nur von einer der an es angeschlossenen Übertragungsstrecken auf. Welche Übertragungsstrecke dies ist, ist zweckmäßigerweise in Abhängigkeit von eventuellen Störungen des Netzes umschaltbar. Zweckmäßigerweise können auch Datenpakete, die von einem Sendermodul an einen aktiven Knoten gesendet werden, in dem aktiven Knoten gekennzeichnet werden. Dies ermöglicht die Übertragung von Datenpaketen von einem Sendermodul an mehrere adressierte Empfängermodule gleichzeitig, ohne daß die Gefahr besteht, daß Datenpakete auf ein und derselben Übertragungsstrecke doppelt übertragen werden und so ein Empfängermodul mehrmals erreichen.

Die Kennzeichnung eines Datenpakets erfolgt in einfacher Weise durch Setzen oder Löschen eines gegebenen Bits im Kopf des Datenpakets.

Das Verfahren erlaubt ferner die Überprüfung der Integrität des Netzwerks durch Austausch von Prüfpaketen zwischen den Knoten. Um einen Übergang der Prüfpakete zwischen aktiven und passiven Knoten zu ermöglichen, sind diese vorzugsweise nicht gekennzeichnet.

In einem Übertragungsnetzwerk, das das erfindungsgemäße Verfahren anwendet, werden zweckmäßigerweise Schnittstellen für den Austausch von Paketen zwischen einem Knoten und einer Übertragungsstrecke des Übertragungsnetzwerks eingesetzt, die zwischen zwei Empfangsbetriebszuständen umschaltbar sind, wobei sie in dem ersten Empfangsbetriebszustand jedes von der Übertragungsstrecke eintreffende Paket kennzeichnen und im zweiten Empfangsbetriebszustand dies nicht tun. Der erste Empfangsbetriebszustand entspricht einem intakten Übertragungsnetzwerk, der zweite wird an wenigstens einer Schnittstelle des passiven Netzes eingeschaltet, wenn die entsprechende Übertragungsstrecke des aktiven Netzes defekt ist.

Ein anderer oder vorzugsweise der gleiche Typ von Schnittstelle ist zwischen zwei Sendebetriebszuständen umschaltbar, wobei sie in dem ersten Sendebetriebszustand für jedes von dem Knoten eintreffende Paket eine Verarbeitung ausführt, bei der sie anhand der Zieladressenangabe des Pakets entscheidet, ob es auf die Übertragungsstrecke ausgegeben werden muß und es ausgibt, wenn es der Fall ist und im zweiten Sendebetriebszustand diese Bearbeitung nur für nicht gekennzeichnete Pakete ausführt. Diese Art von Schnittstelle ist an einer Verbindungsstrecke zwischen aktiven und passiven Knoten einsetzbar.

Eine erfindungsgemäßes Übertragungsnetzwerk enthält Schnittstellen der oben beschriebenen Art an jedem Knoten.

### Figuren

- Figur 1: zeigt ein Blockschema eines erfindunsgemäßen Übertragungsnetzwerks im Normalbetrieb; und
- Figur 2: zeigt das gleiche Übertragungsnetzwerk bei Ausfall einer Verbindungsstrecke.

### Beschreibung eines Ausführungsbeispiels

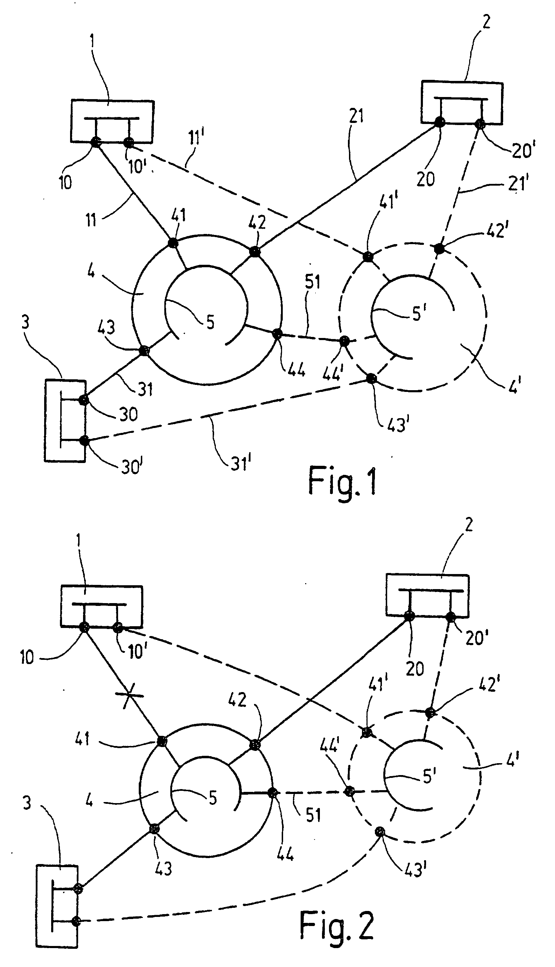

Das in Figur 1 beispielhaft vorgestellte Übertragungsnetzwerk besitzt drei Module 1,2,3, die über aktive Schnittstellen 10,20,30 mit einem aktiven Netz und über Schnittstellen 10',20',30' mit einem passiven Netz verbunden sind. Jedes dieser zwei Netze umfaßt Übertragungsstrecken 11,21,31 beziehungsweise 11',21',31' von einem der Module 1,2,3 zu einem Knoten 4,4'. Die Übertragungsstrecken sind über Schnittstellen 41,42,43 beziehungsweise 41',42',43' an einen internen Bus 5,5' des aktiven beziehungsweise passiven Knotens 4,4' angeschlossen. Eine weitere Übertragungsstrecke 51, im folgenden als Querverbindung bezeichnet, verläuft über Schnittstellen 44,44' zwischen den zwei Knoten 4,4'.

Komponenten, die dem passiven Netz angehören, sind in der Figur durch gestrichelte Linien kenntlich gemacht.

Die Module 1,2,3 können im Prinzip Datenquellen und -senken beliebiger Art sein, vorzugsweise handelt es sich um Vermittlungsanlagen, die an eine Vielzahl von Daten sendenden und oder empfangenden Endgeräten angeschlossen sind, um Gateways zu lokalen Netzen etc.

Jedes dieser Module gibt ein zu sendendes Datenpaket gleichzeitig auf seinen beiden Schnittstellen an das aktive und das passive Netz aus. Es soll beispielhaft der Fall der Übertragung eines Paket vom Modul 1 an das Modul 2 betrachtet werden. Dieses Paket enthält in seinem Kopf eine Zieladressenangabe, die das Modul 2 spezifiziert. Das Paket gelangt über die Schnittstelle 41 auf den Bus 5 des aktiven Knotens 4 und von dort an sämtliche anderen Schnittstellen dieses Knotens. Beim Eintritt in den Knoten kennzeichnet die Schnittstelle 41 das Paket durch Setzen eines Kennzeichenbits in dessen Kopf. Die zu den Modulen 1,2,3 führenden Schnittstellen 41,42,43 werten die Zieladressenangabe aus und leiten das Paket weiter, wenn diese mit einer in der Schnittstelle gespeicherten Adresse des über sie erreichbaren Moduls übereinstimmt. Im vorliegenden Fall erkennt allein die Schnittstelle 42 eine solche Übereinstimmung und leitet das Paket über die Übertragungsstrecke 21 an die aktive Schnittstelle 20 des Moduls 2 weiter.

Die zur Querverbindung 51 führende Schnittstelle 44 prüft, bevor sie die Zieladressenangabe im Kopf des Pakets auswertet, ob es gekennzeichnet ist. Wenn dies der Fall ist, wie im hier betrachteten Fall, wird das Paket ( zum Beispiel selbst bei gleichzeitiger Übereinstimmung der Adresse mit der Nummer des Knotens 4') nicht auf die Querverbindung 51 ausgesendet.

Der analoge Vorgang spielt sich im passiven Knoten 4' ab, so daß das Datenpaket auch an der passiven Schnittstelle 20' des Moduls 2 erscheint. Von diesen zwei Schnittstellen nimmt lediglich eine eintreffende Datenpakete an und leitet sie zur Verarbeitung an das Modul 2 weiter. Diese Schnittstelle ist, solange die Verbindung zwischen Knoten 4 und Modul 2 nicht gestört ist, die Schnittstelle 20. Auf diese Weise kommt das Paket genau einmal am Modul 2 an.

Es wird nun anhand von Figur 2 der Fall betrachtet, daß ein Datenpaket von Modul 1 nach Modul 2 übertragen wird, wobei allerdings die Übertragungsstrecke 11 vom Modul 1 zu aktiven Knoten 4 gestört ist.

In der Figur nicht dargestellte Steuereinheiten der Knoten 4,4' erzeugen und versenden laufend Prüfpakete, um die Integrität des Netzwerks zu überprüfen. Ein solches Paket kann zum Beispiel von einem Knoten an ein Modul geschickt und von diesem eine Quittung verlangt werden, und falls die Quittung nicht eintrifft, wird die Übertragungsstrecke, auf der das Paket gesendet worden ist, als defekt angesehen. Eine andere Möglichkeit ist, daß die Knoten auf der Querverbindung 51 Informationen über empfangene Datenpakete austauschen und aus dem Auftreten einer Diskrepanz auf das Vorhandensein einer Störung schließen. Wenn auf diese oder eine andere Weise die Störung der Übertragungsstrecke 11 erfaßt worden ist, wird die Schnittstelle 41' von ihrem normalen Betriebszustand, in dem sie jedes auf der Übertragungsstrecke 11' ankommende Datenpaket kennzeichnet, in einen zweiten Betriebszustand versetzt, in dem diese Kennzeichnung unterbleibt.

Die Schnittstelle 44', die den Übergang von Datenpaketen vom passiven Knoten auf die Querverbindung 51 kontrolliert, überprüft bei jedem auf dem Bus 5' ankommenden Datenpaket lediglich, ob dies gekennzeichnet ist oder nicht, und läßt es durch, falls es nicht gekennzeichnet ist. Bei einem komplexeren als dem in der Figur gezeigten Netzwerk kann es notwendig sein, daß die Schnittstelle 44' darüber hinaus noch die Zieladressenangabe im Paketkopf auswertet, um zu entscheiden, ob sie ein Paket auf die Querverbindung 51 ausgibt oder nicht. Auf diese Weise gelangt das vom Modul 1 über die passive Verbindungsstrecke 11' gesendete Datenpaket auf dem Umweg über die Querverbindung 51 und die Schnittstelle 44, in der es gekennzeichnet wird, in den aktiven Knoten 5. Dort wird es von der Schnittstelle 42 empfangen und, da die Zieladreßangabe mit der in dieser Schnittstelle gespeicherten Angabe übereinstimmt, zum Modul 2 durchgelassen. Dieses Modul erhält so trotz der Störung auf der Übertragungsstrecke 11 das Datenpaket auf beiden Übertragungsstrecken 21,21'. Das Übertragungsnetzwerk bliebe somit selbst dann noch voll funktionsfähig, wenn zusätzlich eine Schnittstelle des Moduls 2 oder eine Übertragungsstrecke zu ihm ausfiele.

Prüfpakete, die zwischen den Knoten zur Prüfung der Integrität des Übertragungsnetzwerks ausgetauscht werden, sind nicht gekennzeichnet, so daß sie die Schnittstellen 44 oder 44' zur Querverbindung 51 durchlaufen können.

Es wird nun der Fall einer Broadcast-Übertragung betrachtet, bei der ein ausgesendetes Datenpaket eine Zieladreßangabe enthält, die sämtliche erreichbaren Ziele, das heißt alle Module und Knoten des Übertragungsnetzwerks, adressiert. Im in Figur 2 gezeigten Fall der defekten Übertragungsstrecke 11 unterscheidet sich die Handhabung einer solchen Übertragung nicht wesentlich von der einer Punktzu-Punktübertragung. Das Paket erreicht über die Übertragungsstrecke 11' die Schnittstelle 41', wird dort nicht gekennzeichnet und geht auf den Bus 5' des passiven Knotens 4' über. Alle mit einem Modul verbundenen Schnittstellen 41',42',43' leiten das Paket weiter, so daß es die passiven Schnittstellen aller Module erreicht. Da das Paket nicht gekennzeichnet ist, gelangt es auch auf die Querverbindung 51. In der Schnittstelle 44 wird es gekennzeichnet und in den Knoten 4 weitergeleitet. Hier wird es von den mit Modulen verbundenen Schnittstellen 41,42,43 weitergeleitet und erreicht so die aktiven Schnittstellen 10,20,30 der Module. Da es gekennzeichnet ist, wird es nicht von Schnittstelle 44 auf die Querverbindung 51 rückübertragen.

Bei der Betrachtung des Falls einer Broadcast-Übertragung im intakten Übertragungsnetzwerk erkennt man, daß die in diesem Fall auch die Knoten-Schnittstellen 41,42,43 ein auf einer Übertragungsstrecke eintreffendes Paket kennzeichnen müssen. Nimmt man an, daß dieses ungekennzeichnet bleibt, so würde es über die Querverbindung 51 zum passiven Knoten 4' übertragen, würde diesen also auf zwei Wegen erreichen und doppelt an die passiven Schnittstellen aller Module weitergeleitet. Falls eines dieser Module wegen eines Defekts gezwungen ist, mit der passiven Schnittstelle zu empfangen, würde es jedes Broadcastpaket mehrfach erhalten. Indem aber das eintreffende Broadcastpaket in der Schnittstelle 41 gekennzeichnet wird, wird es daran gehindert, die Querverbindung 51 zu durchlaufen. Somit wird jedes Paket auf jeder Übertragungsstrekke genau einmal übertragen.

Zur Durchführung des Verfahrens werden folgende Betriebszustände von Schnittstellen benötigt: Eine Schnittstelle zwischen einer Übertragungsstrecke und einem Knoten wie die Schnittstelle 41 oder 41' muß zwischen einem ersten Empfangsbetriebszustand, in dem über die Verbindungsstrecke eintreffende Pakete gekennzeichnet werden, und einen zweiten Empfangsbetriebszustand, in dem sie nicht gekennzeichnet werden, umschaltbar sein. Wenn die gleiche Schnittstelle auf die Übertragungsstrecke sendet, ist es ohne Belang, ob ein vom Knoten kommendes Datenpaket gekennzeichnet ist oder nicht; ob es durchgelassen wird, hängt allein von seiner Zieladreßangabe ab.

Eine Schnittstelle 44 beziehungsweise 44' an der Querverbindung 51 muß lediglich entscheiden, ob ein vom Knoten kommendes Paket gekennzeichnet ist oder nicht und muß es auf die Querverbindung weiterleiten, wenn es nicht gekennzeichnet ist. In Gegenrichtung aus der Querverbindung 51 empfangene Pakete müssen gekennzeichnet werden.

Zweckmäßigerweise sind sämtliche Schnittstellen 41 bis 44 beziehungsweise 41' bis 44' eines Knotens baugleich und zwischen drei Betriebszuständen umschaltbar, wobei zwei dem Betrieb der Schnittstelle an einer zu einem Modul führenden Übertragungsstrecke entsprechen und während des Betriebs des Übertragungsnetzwerks in Abhängigkeit von eventuell auftretenden Störungen von den Steuereinheiten selektiert werden, während der dritte Betriebszustand, der dem Betrieb an der Querverbindung 51 entspricht, beim Aufbau des Übertragungsnetzwerks fest vorgegeben werden kann und später nicht mehr geändert zu werden braucht.

## Patentansprüche

1. Verfahren zum Betreiben eines duplizierten Übertragungsnetzwerks, das ein aktives und ein passives Netz mit identischer Struktur umfaßt und in dem Datenpakete zwischen Sender-/Empfängermodulen (1,2,3) übertragen werden, wobei durch eine in einem Datenpaket enthaltene Zieladreßangabe ein oder mehrere Empfängermodule adressiert sein können, wobei jedes Empfängermodul (1,2,3) über jeweils eine Übertragungsstrecke (11,21,31;11',21',31') an einen Knoten (4) des aktiven Netzes und einen entsprechenden Knoten (4') des passiven Netzes angeschlossen ist und jeder Knoten (4) des aktiven Netzes an den entsprechenden Knoten (4') des passiven Netzes über eine Verbindungsstrecke (51) angeschlossen ist, wobei zur Übertragung von Daten zwischen Sender- und Empfängermodulen (10;20)
- ein Sendermodul (10) zwei Datenpakete mit gleichem Inhalt an einen Knoten (4) des aktiven Netzes und einen entsprechenden Knoten (4') des passiven Netzes aussendet
- ein Empfängermodul (2) an es adressierte Datenpakete von einem Knoten (4; 4') empfängt, **dadurch gekennzeichnet, dass**
- die Datenpakete bei Eintritt in den passiven Knoten (4') gekennzeichnet werden, wenn die Übertragungsstrecke (11) vom Sendermodul (1) zum aktiven Modul (4) intakt ist;
- für jedes Paket im aktiven und im passiven Knoten die Übertragungsstrecken ermittelt werden, über die es weitergeleitet werden kann;
- jedes Paket über diejenigen ermittelten Übertragungsstrecken weitergeleitet wird, die keine Übertragungsstrecken zwischen einem aktiven und dem entsprechenden passiven Knoten sind, und über eine Übertragungsstrecke (51) zwischen einem aktiven und dem entsprechenden passiven Knoten nur dann weitergeleitet wird, wenn es nicht gekennzeichnet ist.

2. Verfahren nach Anspruch 1, **dadurch gekennzeichnet, daß** jedes Empfängermodul (2) nur von einer (21) der an es angeschlossenen Übertragungsstrecken (21,21') Datenpakete aufnimmt.

3. Verfahren nach einem der Ansprüche 1 oder 2, **dadurch gekennzeichnet, daß** Datenpakete, die von dem Sendermodul (1) an den aktiven Knoten (4) gesendet werden, in dem Knoten gekennzeichnet werden.

4. Verfahren nach einem der vorhergehenden Ansprüche, **dadurch gekennzeichnet, daß** die Kennzeichnung durch Setzen oder Löschen eines gegebenen Bits im Kopf eines Pakets erfolgt.

5. Verfahren nach einem der vorhergehenden Ansprüche, **dadurch gekennzeichnet, daß** Prüfpakete zur Überprüfung der Integrität des Netzwerks zwischen den Knoten (4;4') ausgetauscht werden, und daß die Prüfpakete nicht gekennzeichnet sind.

6. Schnittstelle (41,41') mit Mitteln zur Durchführung des Verfahrens nach einem der Ansprüche 1-5 für den Austausch von Paketen zwischen einem Knoten (4;4') und einer Übertragungsstrecke (11;11') eines Übertragungsnetzwerks, **dadurch gekennzeichnet, daß** sie ein Mittel zum Kennzeichnen eines Pakets aufweist, das zwischen zwei Empfangsbetriebszuständen umschaltbar ist, wobei es in dem ersten Empfangsbetriebszustand jedes von der Übertragungsstrecke (11;11') eintreffende Paket kennzeichnet und im zweiten Empfangsbetriebszustand es nicht kennzeichnet.

7. Schnittstelle, nach Anspruch 6, **dadurch gekennzeichnet, daß** sie Mittel zum Erkennen der Kennzeichnung und Ausgabe eines Pakets aufweist, das zwischen zwei Sendebetriebszuständen umschaltbar ist, wobei es in dem ersten Sendebetriebszustand für jedes von dem Knoten eintreffende Paket entscheidet, ob es auf die Übertragungsstrecke ausgegeben werden muß und es ausgibt, wenn dieses der Fall ist, und im zweiten Sendebetriebszustand das Paket nicht ausgibt, wenn es gekennzeichnet ist.

8. Übertragungsnetzwerk mit Mitteln zur Durchführung des Verfahrens nach einem der Ansprüche 1 bis 5, **dadurch gekennzeichnet, daß** eine Schnittstelle (41;41') nach Anspruch 6 zwischen jedem Knoten (4;4) des aktiven beziehungsweise passiven Netzes und einer Verbindungsstrecke (11;11') vorgesehen ist, die nicht an den entsprechenden Knoten (4;4') des passiven beziehungsweise aktiven Netzes angeschlossen ist und
daß eine Schnittstelle (44;44') nach Anspruch 7 zwischen jedem Knoten (4;4') des aktiven beziehungsweise passiven Netzes und einer Verbindungsstrecke (51) vorgesehen ist, die an den entsprechenden Knoten (4';4) des aktiven Netzes angeschlossen ist.

## Claims

1. A method for operating a duplicated transmission network comprising an active and a passive network of identical structure, and in which data packets are transferred between transmitter/receiver modules (1,2,3), wherein one or more receiver modules can be addressed by a destination address comprised in a data packet, wherein each receiver module (1,2,3) is connected to a node (4) of the active network and a corresponding node (4') of the passive network each via a respective transmission line (11,21,31;11',21',31'), and each node (4) of the active network is connected to the corresponding node (4') of the passive network via a connection line (51), wherein for the transmission of data between transmitter and receiver modules (10,20)
- a transmitter module (10) transmits two data packets with identical content to a node (4) of the active network and a corresponding node (4') of the passive network;
- a receiver module (2) receives data packets addressed to it from a node (4,4'); **characterised in that**
- the data packets are marked when they enter the passive node (4'), if the connection line (11) from the transmitter module (1) to the active module (4) is functioning;
- for each packet are determined transmission lines in the active node and in the passive node, via which it can be relayed;
- each packet is relayed via those determined transmission lines, which are not transmission lines between an active node and the corresponding passive node, and is relayed via a transmission line (51) between an active node and the passive node only if it is not marked.

2. A method according to claim 1, **characterised in that** each receiver module (2) picks up data packets only from one (21) of the transmission lines (21,21') it is connected to.

3. A method according to claim 1 or 2, **characterised in that** the data packets that are transmitted from the transmitter module (1) to the active node (4) are marked in the node.

4. A method according to any of the previous claims, **characterised in that** the marking takes place by setting or deleting a given bit in the header of a packet.

5. A method according to any of the previous claims, **characterised in that** test packets are exchanged for checking the integrity of the network between the nodes (4,4'), and **in that** the test packets are not marked.

6. An interface (41,41') with means for carrying out the method according to any of the claims 1 to 5 for the exchange of packets between a node (4,4') and a transmission line (11,11') of a transmission network, **characterised in that** it comprises a means for marking a Packet, which is switchable between two receive operation modes, wherein in the first receive operation mode it marks each packet arriving from the transmission line (11,11'), and in the second receive operation mode it does not mark the packet.

7. An interface according to claim 6, **characterised in that** it comprises means to recognise the mark and to relay a packet, the means being switchable between two transmit operation modes, wherein in the first transmit operation mode it decides for each packet arriving from the node, if it must be relayed on the transmission line, and transmits it if this is the case, and in the second transmit operation mode it does not transmits the packet if it is marked.

8. Transmission network with means for carrying out the method according to any of the claims 1 to 5, **characterised in that** it comprises an interface (41,41') according to claim 6 between each node (4,4') of the active or accordingly of the passive network and a connection line (11,11'), which is not connected to the corresponding node (4,4') of the passive or accordingly of the active network, and **in that** it comprises an interface (44,44') according to claim 7 between each node (4,4') of the active or accordingly of the passive network and a connection line (51), which is connected to the corresponding node (4',4) of the active network.

## Revendications

1. Procédé pour exploiter un réseau de transmission dupliqué qui comprend un réseau actif et un réseau passif de structure identique et dans lequel des paquets de données sont transmis entre des modules d'émission/réception (1, 2, 3), selon lequel un ou plusieurs modules de réception peuvent être adressés par une indication d'adresse cible contenue dans un paquet de données, chaque module de réception (1, 2, 3) est raccordé à un noeud (4) du réseau actif et à un noeud (4') correspondant du réseau passif par l'intermédiaire d'un trajet de transmission (11, 21, 31 ; 11', 21', 31') respectivement et chaque noeud (4) du réseau actif est raccordé au noeud (4') correspondant du réseau passif par l'intermédiaire d'un trajet de liaison (51), et selon lequel pour transmettre des données entre les modules d'émission et de réception (10 ; 20) :
- un module d'émission (10) envoie deux paquets de données au contenu identique à un noeud (4) du réseau actif et à un noeud (4') correspondant du réseau passif,
- un module de réception (2) reçoit des paquets de données qui lui sont adressés par un noeud (4 ; 4'),
**caractérisé en ce que**
- les paquets de données sont marqués lorsqu'ils entrent dans le noeud passif (4') si le trajet de transmission (11) est intact depuis le module d'émission (1) jusqu'au module actif (4),
- les trajets de transmission sur lesquels le paquet peut être transféré sont établis pour chaque paquet dans le noeud actif et dans le noeud passif,
- chaque paquet est transféré sur les trajets de transmission établis qui ne sont pas des trajets de transmission entre un noeud actif et le noeud passif correspondant et n'est transféré sur un trajet de transmission (51) entre un noeud actif et le noeud passif correspondant que si le paquet n'est pas marqué.

2. Procédé selon la revendication 1,
**caractérisé en ce que**
chaque module de réception (3) ne se charge que de paquets de données d'un (21) des trajets de transmission (21, 21') qui lui sont raccordés.

3. Procédé selon l'une des revendications 1 ou 2,
**caractérisé en ce que**
des paquets de données qui sont envoyés par le module d'émission (1) au noeud actif (4) sont marqués dans le noeud.

4. Procédé selon l'une des revendications précédentes,
**caractérisé en ce que**
le marquage est réalisé en plaçant ou en effaçant un bit donné à la tête d'un paquet.

5. Procédé selon l'une des revendications précédentes,
**caractérisé en ce que**
des paquets de contrôle sont échangés pour vérifier l'intégrité du réseau entre les noeuds (4 ; 4'), et les paquets de contrôle ne sont pas marqués.

6. Interface (41 ; 41') comportant des moyens pour exécuter le procédé selon l'une des revendications 1 à 5 et destiné à échanger des paquets entre un noeud (4 ; 4') et un trajet de transmission (11 ; 11') d'un réseau de transmission,
**caractérisée en ce qu'**
elle présente un moyen pour marquer un paquet, et peut commuter entre deux état de fonctionnement de réception, le moyen marquant alors dans le premier état de fonctionnement de réception chaque paquet qui provient du trajet de transmission (11 ; 11'), et ne le marquant pas dans le deuxième état de fonctionnement de réception.

7. Interface selon la revendication 6,
**caractérisée en ce qu'**
elle présente des moyens pour identifier le marquage et pour émettre un paquet entre deux états de fonctionnement en émission, et peut commuter entre deux états de fonctionnement d'émission, et le moyen décide alors dans le premier état de fonctionnement d'émission pour chaque paquet qui provient du noeud s'il doit être émis sur le trajet de transmission et l'émet si c'est le cas, et dans le deuxième état de fonctionnement d'émission il n'émet pas le paquet s'il est marqué.

8. Réseau de transmission comportant des moyens pour exécuter le procédé selon l'une des revendications 1 à 5,
**caractérisé en ce qu'**
une interface (41 ; 41') selon la revendication 6 est prévue entre chaque noeud (4 ; 4') du réseau actif ou du réseau passif et un trajet de liaison (11 ; 11') qui n'est pas raccordé aux noeuds (4 ; 4') correspondants du réseau passif ou du réseau actif, et une interface (44 ; 44') selon la revendication 7 est prévue entre chaque noeud (4 ; 4') du réseau actif ou du réseau passif et un trajet de liaison (51) raccordé aux noeuds (4 ; 4') correspondants du réseau actif.
